# EUROPÄISCHE PATENTSCHRIFT

(11) **EP 0 547 284 B1**
(45) Veröffentlichungstag und Bekanntmachung des Hinweises auf die Patenterteilung: **04.10.1995**
(21) Anmeldenummer: 92102110.1
(22) Anmeldetag: 08.02.1992
(51) Int. Cl.: C01F 11/22, C02F 1/58, C01C 1/10

(54) **Verfahren zur Gewinnung von Flussspat (CaF2) und Ammoniak bzw. Ammoniakwasser aus einer wässrigen Ammoniumfluoridlösung als Abfallstoff der Brennelement-Herstellung**
Method for the recovery of calcium fluoride and ammonia from aqueous ammonium fluoride solution originating from waste from fuel element production
Méthode de récupération du fluorure de calcium et de l'ammoniac d'une solution aqueuse de fluorure d'ammonium provenant du déchet de production d'élément de combustion

(30) Priorität: 16.12.1991 DE 4141519
(43) Veröffentlichungstag der Anmeldung: 23.06.1993
(73) Patentinhaber: NEUMANN + STALLHERM GmbH, D-45842 Gelsenkirchen (DE)
(72) Erfinder: Klein, Wolfdieter, W-4350 Recklinghausen (DE); Flügge, Helmut, W-4020 Mettmann (DE); Ying, Lu Tzu, W-4390 Gladbeck (DE)
(74) Vertreter: Thiel, Christian, Dr. Dipl.-Chem.

(56) Entgegenhaltungen:
- EP-A- 0 254 063
- DE-A- 2 448 733
- DE-A- 3 200 518

## Beschreibung

Die Erfindung betrifft ein Verfahren zur Gewinnung von Flußspat und Ammoniak oder Ammoniakwasser aus Abwässern der Brennelemente-Herstellung gemäß Anspruch 1. In diesen Abwässern sind aufgrund des Herstellungsverfahrens Fluoride in Form von Ammoniumfluorid und Carbonate in Form von Ammoniumcarbonat enthalten.

Aus DE-20 57 966-A ist die Aufarbeitung derartiger Abwässer grundsätzlich bekannt. Dabei steht die Rückgewinnung von Uran im Vordergrund, eine Option zur Rückgewinnung von CaF₂, sowie die Freisetzung von NH₃ und CO₂ ist angesprochen. Das gleiche Ziel beinhaltet die US-A-4 234 555, sowie das Patent DE-C-29 04 138. Bei allen Verfahren ist aber die Qualität des anfallenden CaF₂ unzureichend. Dies hat zur Folge, daß das CaF₂ kein verkaufsfähiges, wiederverwertbares Wirtschaftsgut darstellt, sondern als Abfallstoff deponiert werden muß. Verfahrensbedingt ist auch das NH₃ als Produkt nicht wiederverwertbar. Durch die Begleitsubstanzen F⁻ und CO₂ ist das NH₃ so stark verunreinigt, daß es als wiederverwertbares Wirtschaftsgut nicht mehr eingesetzt werden kann, aber auch eine prozeßinterne Wiederverwertung ausgeschlossen ist.

DE-A-2 448 733 betrifft ein Verfahren zur Aufbereitung von Ammonium fluorid enthaltendem Abwasser, bei dem das Fluorid durch Zugabe von Calciumhydroxid ausgefällt und das entstehende Ammoniak destillativ gewonnen wird.

Eine weitere Möglichkeit ist in der DE-32 00 518A beschrieben, wobei das Hauptaugenmerk auf die Rückgewinnung von NH₃ und CO₂ gelegt wird, um sie erneut zur Umsetzung von UF₆ einzusetzen.

Alle diese Verfahren zielen nicht darauf ab, die Abwasserinhaltsstoffe als wiederverwertbare Wirtschaftsgüter in den Wirtschaftskreislauf zurückzuführen. Dies ist auch nur möglich, wenn Produkte mit den entsprechenden marktgerechten Spezifikationen erzeugt werden können.

Demgemäß besteht die Aufgabe darin, die Abfallstoffe Ammoniumfluorid und Ammoniumcarbonat in wiederverwertbare Wirtschaftsgüter umzuwandeln. Die zu erzeugenden Produkte sind einerseits technisch verwertbarer Flußspat (CaF₂) als Hauptprodukt und Ammoniak (NH₃) als Nebenprodukt.

Diese Aufgabe wird mit einem Verfahren nach Anspruch 1 gelöst.

Entsprechend wird das Abwasser zunächst mit Calciumhydroxid behandelt. Vorzugsweise wird dazu die Ammoniumfluoridlösung mit Kalkmilch mit 3-25 Gew.-% Calciumhydroxid, Ca(OH)₂ , in der Regel 10-15 Gew.-%, gemäß der Reaktionsgleichung

2 NH₄F + Ca(OH)₂-----> CaF₂ + 2NH₄OH

zur Reaktion gebracht. Dabei wird die Kalkmilch zwischen 0 und 10 Mol%, in der Regel 3 Mol% überstöchiometrisch dosiert. Die Reaktion erfolgt bei einer Temperatur zwischen 10 und 60° C, in der Regel bei ca. 30° C und einem pH-Wert von 8-10.

Das als Begleitsubstanz enthaltene Ammoniumcarbonat (NH₄)₂CO₃ wird dabei gemäß der bekannten Reaktionsgleichung

(NH₄)₂CO₃ + Ca(OH)₂-----> CaCO₃ + 2 NH₄OH

in Calciumcarbonat umgesetzt. Es entsteht eine Suspension, die die schwerlöslichen Stoffe Calciumfluorid und Calciumcarbonat als Feststoff und gelöstes Ammoniak, in Form von NH₄OH, enthält.

Gemäß Anspruch 2 wird das im Reaktionsgemisch enthaltene gelöste Ammoniak durch thermische Behandlung ausgetrieben. Vorzugsweise wird dazu die Suspension in einem Stripper mit Dampf behandelt, wobei die Suspension gemäß den technischen Forderungen ammoniakfrei im Sumpf anfällt.

Diese Reaktion erfolgt in der Regel bei etwa Normaldruck, z.B. zwischen 1-2 bar und bei einer dem Druck entsprechenden Siedetemperatur. Sie kann aber auch bei höheren Drücken, je nach den Erfordernissen der Nachverarbeitung des Ammoniaks, durchgeführt werden. Dabei ist die Temperatur entsprechend anzupassen.

Das Ammoniak wird über Kopf abgetrieben. Der Reinheitsgehalt wird durch die Rückflußmenge im Abtriebsteil der Strippkolonne, die mit Trennböden versehen ist, eingestellt.

Je nach der Weiterverwendung kann das Ammoniak in reiner Form gemäß Anspruch 7 mit 99,8-99,9 Gew.-% NH₃-Anteil oder als Ammoniakwasser gemäß Anspruch 6 in beliebiger Konzentration, in der Regel mit 25 Gew.-% NH₃ in handelsüblicher Qualität, erzeugt werden.

Der Restgehalt an NH₃ in der behandelten Suspension im Strippersumpf liegt zwischen 0,01 und 0,04 Gew.-% NH₃, in der Regel bei 0,02 Gew.-% NH₃.

Um die gewünschte Endreinheit des Calciumfluorid von mindestens 98 Gew.-% CaF₂ zu erhalten, muß das Calciumcarbonat entfernt werden. Dies ist durch Zugabe von Flußsäure (HF) im überschuß gemäß Anspruch 3 möglich. Dabei setzt sich das Calciumcarbonat unter Freigabe von CO₂ gemäß bekannter Reaktionsgleichung

CaCO₃ + 2 HF -----> CaF₂ + CO₂ + H₂O

in Calciumfluorid um. Damit wird nicht nur das Carbonat beseitigt, sondern zusätzliches Produkt erzeugt. Die Reaktion erfolgt bei 1,1 bis 2,5 bar, in der Regel bei etwa 1,2 bar, und bei 60 bis 120° C, in der Regel bei etwa 90° C, sowie bei einem pH-Wert von 6 bis 8. Die Dosierung der Flußsäure wird kolorimetrisch überwacht, die Reaktion vorzugsweise überstöchiometrisch gefahren.

Um die überschüssige Flußsäure (HF) aus dem Produkt CaF₂ zu entfernen, wird das Produkt gemäß Anspruch 4 einer Entwässerung, vorzugsweise durch Filtration, und einer Endreinigung durch Waschen mit Frischwasser unterzogen.

Gemäß Anspruch 5 erfolgt die Trocknung des CaF₂-Filterkuchens und die Überführung des Filterkuchens in trockenes Calciumfluoridpulver in einem indirekt beheizten Schneckenförderer, aus dem der erzeugte Flußspat trocken und in Pulverform ausgetragen wird.

Das Verfahren gemäß Hauptanspruch 1 und den Unteransprüchen 2 bis 7 ist nachfolgend beschrieben.

Die Erfindung wird durch die beiliegenden Abbildungen näher erläutert. Von diesen zeigt
- Fig. I: die Gewinnung des Flußspats und
- Fig. II: zusätzlich die Gewinnung von technisch reinem Ammoniak.

Für die Erzeugung von Ammoniakwasser mit einem NH₃-Gehalt von 25 Gew.-% ist das Schema entsprechend Fig. I ausreichend, wobei die Produktströme 3 und 32 die gewünschten Produkte darstellen.

Für die Erzeugung von technisch reinem Ammoniak ist zusätzlich das Verfahren gemäß Figur II erforderlich, wobei der Produktstrom (32) entsprechend den Erfordernissen zu konditionieren ist.

Die Gewinnung von Flußspat und Ammoniakwasser erfolgt gemäß Figur I wie folgt:

Der zu behandelnde Stoffstrom (1), bestehend aus Wasser, Ammoniumfluorid und Ammoniumcarbonat wird mit ca. 10 - 15 %-iger Kalkmilch (5) vermischt. Die Kalkmilch wird aus Calciumhydroxid (2) und dem Waschwasser (27) hergestellt.

Im gerührten Reaktionsbehälter (7) erfolgt die Umsetzung von Ammoniumfluorid und -carbonat zu Calciumfluorid und Calciumcarbonat. Dieser Rührkessel kann aus einem Behälter, oder einer Rührkesselkaskade bestehen.

Nach abgeschlossener Reaktion wird die gebildete Calciumfluorid- /Calciumcarbonatsuspension, in der das Ammoniak gelöst ist, über die Pumpe (8) und die Leitung (9) der Stripperkolonne (10) zugeführt. Im unteren Teil der Kolonne (10) wird Dampf (31) aufgegeben, um das Ammoniak mit Wasserdampf über Kopf abzutreiben und mittels Kopfkondensator (28) zu Ammoniakwasser (29) zu kondensieren. Die gewünschte Reinheit des Kopfproduktes wird über den Rücklauf (30) eingestellt, das Produkt (32) wird ausgeschleust. Im Sumpf des Strippers (10) wird die ammoniakfreie Feststoff-Suspension gesammelt und als Sumpfprodukt (11) mittels Pumpe (12) dem Reaktionsgefäß (15) zugeführt. In diesem Reaktionsgefäß wird die gewünschte Flußspatgualität eingestellt. Die Qualität wird hauptsächlich durch den Calciumcarbonatgehalt des Calciumfluorides bestimmt. Deshalb wird dem Sumpfprodukt (11) Flußsäure (13) mittels Pumpe (14) zudosiert. Die Dosierpumpe wird durch kolorimetrische Überwachung im Sumpfproduktstrom (16) des Reaktorgefäßes (15) gesteuert.

Im Reaktonsgefäß (15), ausgestattet mit Rührer, erfolgt die Umsetzung des Calciumcarbonates zu Calciumfluorid und Kohlendioxid. Das gasförmige Kohlendioxid verläßt den Kopf des Reaktionsgefäßes (15) als Strom (17) und kann z. B. an die Umwelt abgegeben werden. Da diese Reaktion bei nahezu Siedetemperatur erfolgt, wird die Flüssigkeit bis auf kleine Mengen CO₂ entgast.

Das Sumpfprodukt (16) wird einer Vakuumfilterstation (18) zugeführt in der die Abtrennung des Calciumfluorids erfolgt. Der Filterkuchen wird einer Vorwäsche mit Kondensat (24) und einer Nachwäsche mit Frischwasser (25) unterzogen.

Das saubere Endprodukt, Flußspat, verläßt als Strom (19) die Filterstation (18) und wird der Trocknung (20) zugeführt. In ihr wird durch indirekte Beheizung mittels eines Wärmeträgers

(21) die Feuchtigkeit in Form von Brüden ausgetragen, die im Kondensator (22) mit Kühlwasser (23) niedergeschlagen werden.Das Kondensat verläßt den Kondensator (22) und wäscht als Strom (24) die austretenden Gase aus der Filterstation, wobei die mitgeschleppten Dämpfe kondensiert werden.

Das Produkt (3) verläßt die Trocknung (20) in Pulverform.

Das Wasser aus der Filterstation wird über die Pumpe (26) einerseits als Strom (27) für die Ansetzung der Kalkmilch benutzt und andererseits als Abwasser (4) abgeführt.

Die Konditionierung des Ammoniakwassers (32) zu Reinammoniak (46) gemäß Figur II erfolgt, wie nachfolgend beschrieben, unter Druck. Sie kann auch bei Normaldruck erfolgen, erfordert jedoch dann eine Verflüssigungsstufe.

Das NH₃-Wasser aus dem Stripper ((10), Figur I) wird als Strom (32), der Vorlage (33) zugeführt, mittels Pumpe (34) auf den erforderlichen Prozeßdruck zwischen 15 - 18 bar gebracht und der Rektifikationskolonne (35) zugeführt. Die Vorwärmung des Eintrittstroms erfolgt im Wärmetauscher (49) durch das Sumpfprodukt (48) der Kolonne (35). Die erforderliche Restwärme wird durch Strippdampf (50) eingebracht, der im unteren Kolonnenteil aufgegeben wird. Die im Kolonnenkopf ausgetragenen NH₃- und Wasserdämpfe (36), werden im Wärmetauscher (37) kondensiert. Der Rücklauf (39) ist für die Einstellung der Kopfproduktreinheit erforderlich. Das Produkt (38) der Kolonne (35) wird im Vorwärmer (52) im Gegenstrom zum Sumpfprodukt (51) der Rektifikationskolonne (35) vorgewärmt und der Kolonne (40) zugeführt. Die erforderliche Restwärme zur Einstellung der NH₃- Qualität von 99,8 - 99,9 % NH₃ wird über einen dampfbeheizten Reboiler (53) aufgebracht.

Im Kolonnenkopf fällt das Reinammoniak (41) an. Im Kopfkondensator (42) erfolgt die Kondensation zu Flüssigammoniak (43), das in der Vorlage (44) gesammelt wird. Ein Teilstrom wird als Rückfluß (47) mittels Pumpe (45) dem Kolonnenkopf zur Einstellung der Qualität aufgegeben, das Produkt (46) wird in das Ammoniaktanklager abgegeben.

Im Sumpf der Kolonnen (35) und (40) fällt Wasser mit einem Ammoniakgehalt <100 ppm NH₃ an, das unbedenklich als Strom (54) nach einem Schlußkühler (55) ins Abwasser (56) abgegeben werden kann.

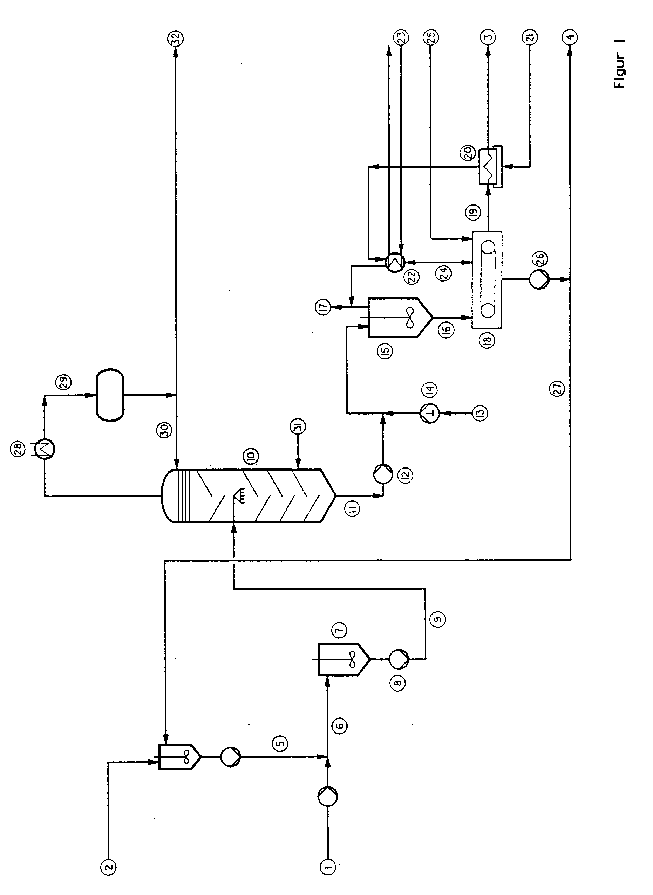

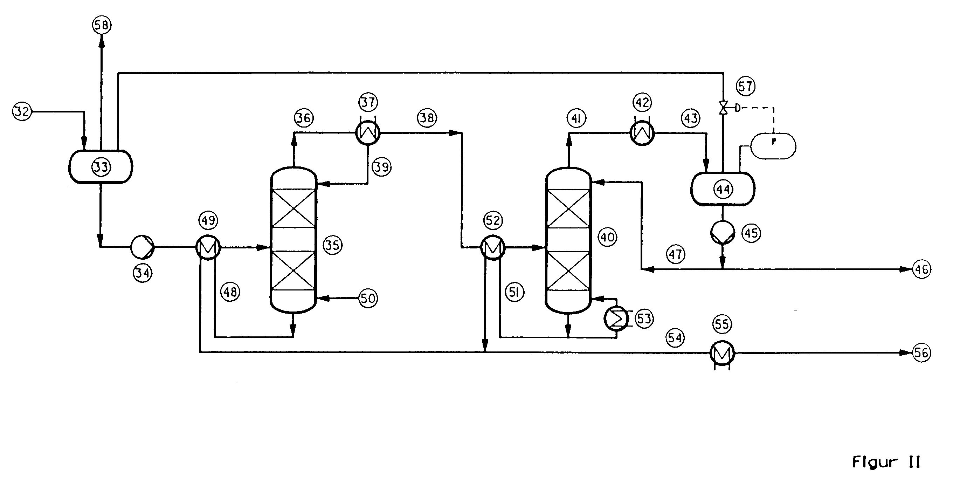

## Patentansprüche

1. Verfahren zur Behandlung von Ammoniumfluorid und -carbonat enthaltenden Abwässern der Brennelement-Herstellung, bei dem das Abwasser zunächst mit Calciumhydroxid behandelt wird, um das Ammoniumfluorid und Ammoniumcarbonat unter Freisetzung von Ammoniak in schwer lösliches Calciumfluorid und Calciumcarbonat umzusetzen und danach das Calcium-carbonat durch Reaktion mit Flußsäure in Calciumfluorid überführt wird und die Produkte gewonnen werden.

2. Verfahren nach Anspruch 1, dadurch gekennzeichnet, daß das gelöste Ammoniak durch thermische Behandlung, vorzugsweise mittels Dampf, aus der Reaktionsmischung ausgetrieben wird.

3. Verfahren nach einem der Ansprüche 1 oder 2, dadurch gekennzeichnet, daß die Reaktionsmischung mit Flußsäure in leichtem stöchiometrischen Überschuß behandelt wird.

4. Verfahren nach einem der Ansprüche 1 bis 3, dadurch gekennzeichnet, daß der Flußspat aus der Reaktionsmischung, vorzugsweise durch Filtration, abgetrennt und anschließend säurefrei gewaschen wird.

5. Verfahren nach Anspruch 4, dadurch gekennzeichnet, daß der Flußspat einer Trocknung unterzogen wird, vorzugsweise mittels einer indirekt beheizten Trockenschnecke.

6. Verfahren nach einem oder mehreren der vorstehenden Ansprüche, dadurch gekennzeichnet, daß das Ammoniak im Abtriebsteil eines Strippers konzentriert wird.

7. Verfahren nach Anspruch 6, dadurch gekennzeichnet, daß mittels ein- oder mehrstufiger Strippung und thermischer Abtrennung des Wassers Reinammoniak erzeugt wird.

8. Verfahren nach Anspruch 6 oder 7, dadurch gekennzeichnet, daß die Ammoniak-Gewinnung unter Druck erfolgt, wobei der Druck so gewählt wird, daß unter den vorgesehenen Kühlbedingungen Ammoniak in flüssiger Form anfällt.

## Claims

1. A process for the treatment of waste water containing ammonium fluoride and ammonium carbonate from the production of fuel elements, wherein the waste water is first treated with calcium hydroxide in order to convert the ammonium fluoride and ammonium carbonate into difficultly-soluble calcium fluoride and calcium carbonate with liberation of ammonia, whereafter the calcium carbonate is converted into calcium fluoride by reaction with hydrofluoric acid and the products are obtained.

2. A process according to claim 1, characterised in that the dissolved ammonia is expelled from the reaction mixture by heat-treatment, preferably by steam.

3. A process according to claim 1 or 2, characterised in that the reaction mixture is treated with a slight stoichiometric excess of hydrofluoric acid.

4. A process according to any of claims 1 to 3, characterised in that the fluorite is separated from the reaction mixture, preferably by filtration, and then washed free from acid.

5. A process according to claim 4, characterised in that the fluorite is dried, preferably in an indirectly heated drying screw conveyor.

6. A process according to one or more of the preceding claims, characterised in that the ammonia is concentrated in the stripper part of a stripper.

7. A process according to claim 6, characterised in that pure ammonia is produced by single-stage or multi-stage stripping and thermal separation of the water.

8. A process according to claim 6 or 7, characterised in that ammonia is produced under pressure, the pressure being so chosen that ammonia is obtained in liquid form under the chosen cooling conditions.

## Revendications

1. Procédé de traitement d'eaux résiduaires contenant du fluorure d'ammonium et du carbonate d'ammonium provenant de la production d'éléments de combustibles, dans lequel on traite d'abord l'eau résiduaire avec de l'hydroxyde de calcium, pour transformer le fluorure d'ammonium et le carbonate d'ammonium en libérant de l'ammoniac et pour donner du fluorure de calcium et du carbonate de calcium peu solubles, et ensuite on fait réagir le carbonate de calcium avec de l'acide fluorhydrique pour donner du fluorure de calcium et on récupère les produits.

2. Procédé selon la revendication 1, caractérisé en ce qu'on élimine l'ammoniac dissous par traitement thermique, de préférence au moyen de vapeurs, lors du mélange réactionnel.

3. Procédé selon l'une des revendications 1 ou 2, caractérisé en ce qu'on traite le mélange réactionnel avec de l'acide fluorhydrique en léger excès stoechiométrique.

4. Procédé selon l'une des revendications 1 à 3, caractérisé en ce qu'on sépare la fluorine du mélange réactionnel, de préférence par filtration et ensuite on lave pour éliminer l'acidité.

5. Procédé selon la revendications 4, caractérisé en ce qu'on soumet la fluorine à un séchage, de préférence au moyen d'une vis sans fin de séchage chauffée indirectement.

6. Procédé selon l'une ou plusieurs des revendications précédentes, caractérisé en ce qu'on concentre l'ammoniac dans la partie de strippage d'un strippeur.

7. Procédé selon la revendication 6, caractérisé en ce qu'on produit de l'ammoniac pur au moyen d'un strippage mono- ou polyétagé et qu'on sépare thermiquement l'eau.

8. Procédé selon la revendication 6 ou 7, caractérisé en ce qu'on obtient l'ammoniac sous pression, en choisissant la pression de telle façon qu'on obtient l'ammoniac sous forme liquide dans les conditions de refroidissement prévues.
